# EUROPÄISCHE PATENTSCHRIFT

(11) **EP 0 754 933 B1**
(45) Veröffentlichungstag und Bekanntmachung des Hinweises auf die Patenterteilung: **05.12.2001**
(21) Anmeldenummer: 96109635.1
(22) Anmeldetag: 15.06.1996
(51) Int. Cl.: G01D 5/36

(54) **Positionsmessvorrichtung**
Position measuring device
Dispositif de mesure de positions

(30) Priorität: 15.07.1995 DE 19525874
(43) Veröffentlichungstag der Anmeldung: 22.01.1997
(73) Patentinhaber: Dr. Johannes Heidenhain GmbH, 83292 Traunreut (DE)
(72) Erfinder: Holzapfel, Wolfgang, Dr., 83119 Obing (DE); Huber, Walter, Dipl.-Ing., 83278 Traunstein (DE)

(56) Entgegenhaltungen:
- DE-A- 3 416 864
- US-A- 5 061 073

## Beschreibung

Die Erfindung bezieht sich auf eine Vorrichtung zur photoelektrischen Erzeugung von elektrischen Signalen bei Längen- oder Winkelmeßeinrichtungen gemäß dem Oberbegriff des Anspruches 1.

Derartige Meßeinrichtungen sind bekannt. Eine Positionsmeßeinrichtung der gattungsgemäßen Art ist in der DE-34 16 864-C2 ausführlich abgehandelt worden.

Auch die Probleme, die solchen Positionsmeßeinrichtungen eigen sind, wenn Referenzimpulse erzeugt werden sollen, sind dort bereits erwähnt und Lösungswege angegeben. Die Anordnung der Photodetektoren richtet sich dort nach der Wellenlänge des Lichtes sowie nach der Orientierung und den Gitterparametern der Phasengitter.

Konkret beschrieben ist dort eine Referenzmarke, die mit Hilfe von Transversalgittern als Teilungsmarkierungen des Maßstabs das auftreffende Lichtstrahlenbündel in zwei senkrecht zur Meßrichtung unterschiedlich geneigte Teilstrahlenbündel aufspaltet. Diese Teilstrahlenbündel werden von zwei in der Brennebene der Kondensorlinse angeordneten Photoelementen erfaßt, die das gewünschte Takt- und Gegentaktsignal liefern. Da beide Teilstrahlenbündel im wesentlichen das gleiche Teilungsfeld des Maßstabs abtasten, kann diese Anordnung als Einfeld-Referenzmarke bezeichnet werden. Sie ist somit besonders verschmutzungsunempfindlich. Als kritisch erweist sich in der Praxis allerdings die optische Trennung zwischen den Teilstrahlenbündeln der Referenzmarke und denjenigen der Inkrementalabtastung, die bei kleinen Abtastsystemen durch eine einzige Kondensorlinse abgebildet werden müssen. Es darf kein Teilstrahlenbündel der Referenzmarke auf Photoelemente der Inkrementalabtastung fallen, was zu Meßfehlem führen würde. Die der Referenzmarke zugeordneten Teilstrahlenbündel werden durch die auf der Maßverkörperung befindlichen Transversalgitter senkrecht zur Meßrichtung abgelenkt. Dabei entstehen neben den gewollten, ±1 transversalen Beugungsordnungen der Transversalgitter auch andere (0., ±2., ±3., ...), die in der Praxis nie vollständig unterdrückt werden können. All diese Teilstrahlenbündel der Referenzmarke beleuchten große Bereiche der Brennebene der Kondensorlinse, so daß die Anordnung der Photoelemente der Inkrementalspur insbesondere bei kurzbrennweitigen Kondensorlinsen schwierig ist.

Aufgabe dieser Erfindung ist es deshalb, eine Positionsmeßvorrichtung mit einer Referenzmarke anzugeben, die eine Einfeldabtastung ermöglicht, und deren Teilstrahlenbündel leicht von den Teilstrahlenbündeln einer Inkrementalabtastung getrennt werden können.

Diese Aufgabe wird von der Positionsmeßvorrichtung mit den Merkmalen des Anspruches 1 gelöst.

Durch die Merkmale, die in den abhängigen Ansprüchen angegeben sind, wird die erfindungsgemäße Positionsmeßvorrichtung vorteilhaft ausgestaltet.

Mit Hilfe der Zeichnungen die Erfindung anhand von Ausführungsbeispielen näher erläutert.

Es zeigt
- Figur 1: eine Darstellung einer Längenmeßeinrichtung;
- Figur 2: einen Optik-Plan für eine Referenzmarken-Abtastung;
- Figur 3: einen Lageplan von Lichtquelle und Photoelementen für den Optik-Plan gemäß Figur 2;
- Figur 4: einen Ausschnitt einer Abtastplatte mit Referenzmarken-Abtastfeld;
- Figur 5: einen Ausschnitt eines Teilungsträgers mit Referenzmarke;
- Figur 6: ein Signaldiagramm;
- Figur 7: eine Variante eines Referenzmarken-Abtastfeldes und
- Figur 8: eine weitere Variante eines Referenzmarken-Abtastfeldes.

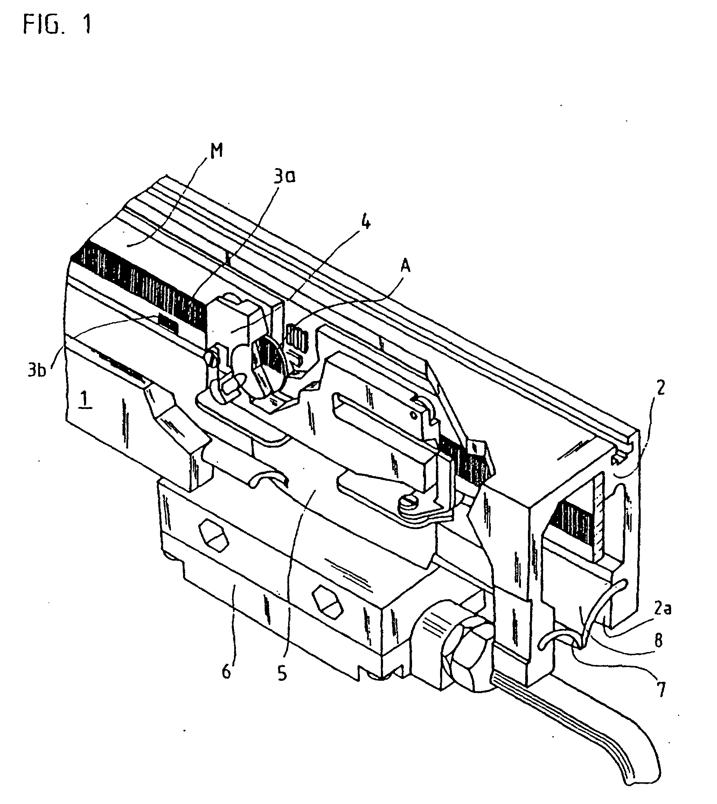

Eine in Figur 1 dargestellte Längenmeßeinrichtung 1 besteht im wesentlichen aus einem Leichtmetall-Gehäuse 2, in dem ein Teilungsträger M in bekannter Weise befestigt ist. Das Gehäuse 2 ist teilweise geschnitten dargestellt, so daß eine Abtasteinrichtung 4 sichtbar wird. Die Abtasteinrichtung 4 tastet in ebenfalls bekannter Weise photoelektrisch eine Meßteilung 3a ab, die auf dem Teilungsträger M aufgebracht ist. Einem bestimmten Ort ist eine Referenzmarke 3b zugeordnet. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Gehäuse 2, der durch dachförmig angeordnete Dichtlippen 7 und 8 abgedichtet ist.

Eine nicht dargestellte Maschine, bei der die Verschiebungen zwischen Maschinenbett und Schlitten gemessen werden sollen, trägt am Maschinenbett über Montagefuß 6 und Mitnehmer 5 die Abtasteinrichtung 4 und am Schlitten das Gehäuse 2 mit dem Teilungsträger M.

Bei den folgenden Betrachtungen ist der Einfachheit halber der Strahlengang der Abtastung der Inkrementalspur nicht mehr gezeigt und beschrieben. Vorzugsweise erfolgt sie jedoch mit Hilfe derselben Lichtquelle und Kollimatorlinse.

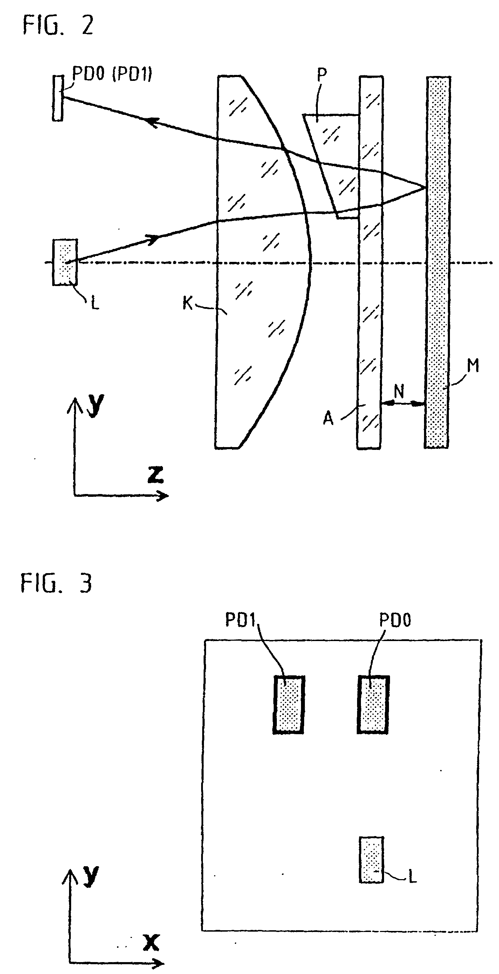

In Figur 2 ist ein Optik-Plan schematisch dargestellt. Die Koordinatenrichtungen sind zur besseren Orientierung eingezeichnet, wobei die Meßrichtung X senkrecht zur Zeichnungsebene verläuft.

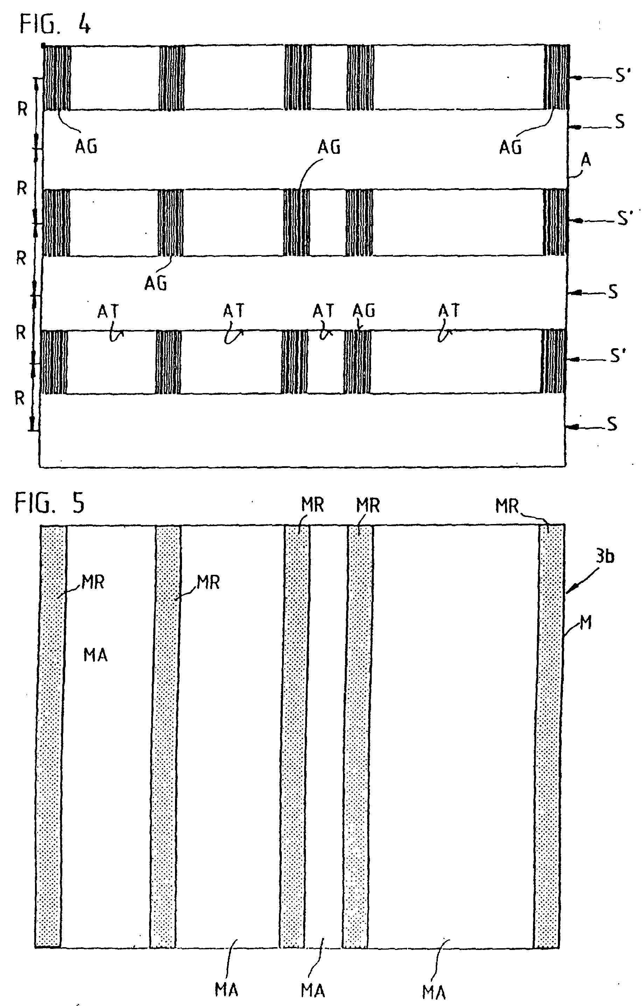

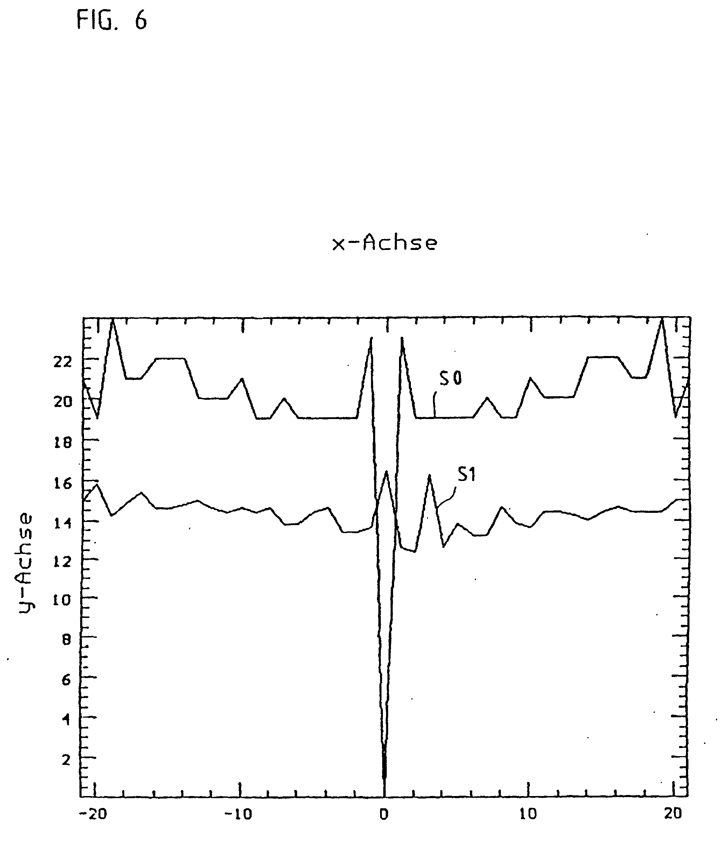

Das Licht einer Lichtquelle L, vorzugsweise eine LED oder ein Halbleiterlaser, wird durch eine Linse K kollimiert und durch ein Prisma P senkrecht zur Meßrichtung X abgelenkt (in Y-Richtung). Es trifft auf eine Abtastplatte A, die gemäß Figur 4 aus mehreren Spuren S, S' besteht, die senkrecht zur Meßrichtung X periodisch abwechselnd angeordnet sind. Während die Spuren S transparent sind, enthalten die strukturierten Spuren S' transparente Bereiche AT zwischen den Teilungsmarkierungen AG, die als Longitudinalgitter AG ausgebildet sind und die entlang der Meßrichtung X ähnlich der Spalten einer herkömmlichen Referenzmarke angeordnet sind. Die Longitudinalgitter AG (Teilungsmarkierungen) sind dabei als Phasengitter ausgebildet, deren Stege senkrecht zur Meßrichtung X verlaufen und die so ausgebildet sind, daß deren 0. Beugungsordnung unterdrückt ist. Das durch die Abtastplatte A hindurchtretende Strahlenbündel trifft auf den Reflexionsmaßstab M mit einer Anordnung aus reflektierenden Teilungsmarkierungen MR und absorbierenden (oder streuenden) Bereichen MA. Die Verteilung der transparenten Bereiche AT der Abtastplatte A entspricht dabei der Anordnung der absorbierenden Bereiche MA der Referenzmarkenstruktur 3b des Maßstabes M (Figur 5). Die Anordnung bzw. Verteilung der reflektierenden Teilungsmarkierungen MR und der transparenten Bereiche AT ist in bekannter Weise derart gewählt, daß ausschließlich in einer Nullposition ein Abtastsignal S0 (Figur 6) mit einem Extremum erzeugt wird.

Das vom Maßstab M reflektierte Strahlenbündel durchläuft ein zweites Mal die Abtastplatte A und das Prisma P und wird durch die Linse K auf zwei Photoelemente PD0 und PD1 gelenkt (siehe Figur 3). PD0 detektiert dabei dasjenige Teilstrahlenbündel, welches durch die zweimalige Prismaablenkung nur senkrecht zur Meßrichtung abgelenkt wird. Das Teilstrahlenbündel, das von PD1 erfaßt wird, wird zudem auch noch von den Longitudinalgittern AG in Meßrichtung X in erster Beugungsordnung gebeugt.

Zunächst wird die Nullposition der Referenzmarke 3b betrachtet, an der sich die identischen Anordnungen der absorbierenden Bereiche MA des Maßstabes M und der transparenten Bereiche AT der Abtastplatte A gegenüberstehen.

Das Lichtstrahlenbündel, welches durch die transparenten Spuren S fällt, beleuchtet in Meßrichtung X gleichmäßig den Maßstab M und wird von den Teilungsmarkierungen MR reflektiert. Da das Lichtstrahlenbündel durch die Wirkung des Prismas P senkrecht zur Meßrichtung geneigt ist, trifft es beim zweiten Durchgang durch die Abtastplatte A nicht mehr auf die transparente Spur S, sondern auf die strukturierte Spur S'. Die Spurbreiten von S bzw. S' werden entsprechend gewählt. Das von den Teilungsmarkierungen MR reflektierte Lichtstrahlenbündel gelangt nun anschließend auf die Longitudinalgitter AG und wird in erster (longitudinaler) Beugungsordnung abgelenkt. Das Lichtstrahlenbündel fällt daher auf das Photoelement PD1, welches in der Nullposition ein hohes Taktsignal S1 liefert. PD0 erzeugt in dieser Position ein besonders niedriges Gegentaktsignal S0.

Ähnliche Signalanteile liefert das Lichtstrahlenbündel, das beim ersten Durchgang durch die Abtastplatte A auf die strukturierten Spuren S' und beim zweiten Durchgang auf die transparenten Spuren S fällt: Das beim ersten Durchgang auf die transparenten Bereiche AT treffende Teilstrahlenbündel wird von den Bereichen MA des Maßstabes M absorbiert. Nur das Teilstrahlenbündel, das zunächst durch die Longitudinalgitter AG in erster (longitudinaler) Beugungsordnung abgelenkt wird, trifft zumindest teilweise auf die reflektierenden Teilungsmarkierungen MR des Maßstabes M und wird schließlich über die transparente Spur S auf das Photoelement PD1 gelenkt. Der Signalpegel S1 dieses Photoelementes PD1 wird auf diese Weise weiter angehoben, während das Photoelement PD0 weiterhin einen niedrigen Signalpegel S0 aufweist.

Das Prisma P zur Erzeugung des transversalen Versatzes der Lichtstrahlenbündel am Hin- und Rückweg ist besonders vorteilhaft, da es einen definierten Versatz ohne Streulicht verursacht. Die Neigung des Prismenwinkels ist so gewählt, daß ein Lichtstrahlenbündel, das beim Hinweg L-K-P-A-M durch eine der Spuren S fällt beim Rückweg M-A-P-K-PD transversal versetzt durch eine der anderen Spuren S' fällt, und daß ein Lichtstrahlenbündel, das beim Hinweg durch eine der Spuren S' fällt, beim Rückweg transversal versetzt durch eine der anderen Spuren S fällt. Der Nennabstand N zwischen der Abtastplatte A und dem Maßstab M ist so dimensioniert, daß bei einem vorgegebenen Prismenwinkel die Lichtstrahlenbündel von Hin- und Rückweg im Abstand von R auf die Abtastplatte A treffen.

Wie aus Figur 4 ersichtlich ist, sind die transparenten Spuren S breiter (in Y-Richtung) als die Spuren S'. Dies ist besonders vorteilhaft um zu gewährleisten, daß bei einer Veränderung des Abstandes N die Spuren S' auf S und S auf S' abgebildet werden, ohne daß eine Modulation erfolgt. Auch bei einer Veränderung des Abstandes N wird S' vollständig auf S abgebildet, ohne daß eine Randabschattung erfolgt.

Außerhalb der Nullposition wird relativ viel Licht über die Lichtwege S-MR-AT und AT-MR-S auf das Photoelement PD0 gelenkt, so daß dessen Signalpegel S0 steigt. In Figur 6 sind typische Signalverläufe S0, S1 der Photoelemente PD0 (Gegentaktsignal) und PD1 (Taktsignal) aufgetragen. Bei diesem Beispiel besitzt das Taktsignal S1 an der Nullposition kein ausgeprägtes Maximum. Ursache hierfür ist, daß das Teilstrahlenbündel, das beim ersten Durchgang durch die Abtastplatte A auf die Longitudinalgitter AG fällt, in Meßrichtung X abgelenkt wird und versetzt auf den Maßstab M trifft. Das relativ schwach modulierte Taktsignal S1 dient in dieser Ausführung dazu, aus dem gleichen Teilungsfeld des Maßstabes M einen Referenzpegel zum stark modulierten Gegentaktsignal S0 zu erzeugen (Einfeldabtastung). Derartige Einfeldabtastungen sind besonders verschmutzungsunempfindlich, da bei einer Verschmutzung beide Signale gleichermaßen beeinträchtigt werden. Taktsignal S1 und Gegentaktsignal S0 werden in bekannter Weise in Differenz verschaltet, um aus den Schnittpunkten beider Signale S1 und S0 einen Referenzimpuls zu erhalten. Die Referenzimpulsbreite kann durch unterschiedliche Verstärkung der beiden Signale S0, S1 eingestellt werden.

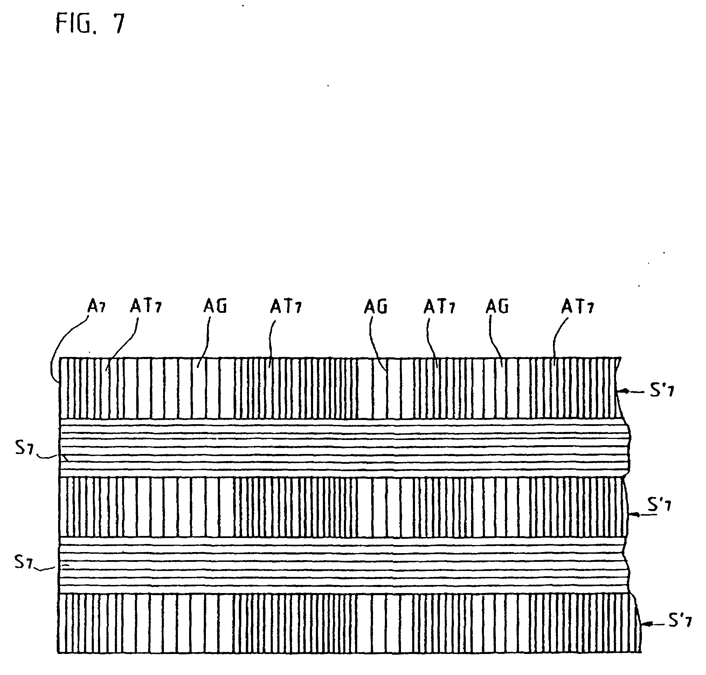

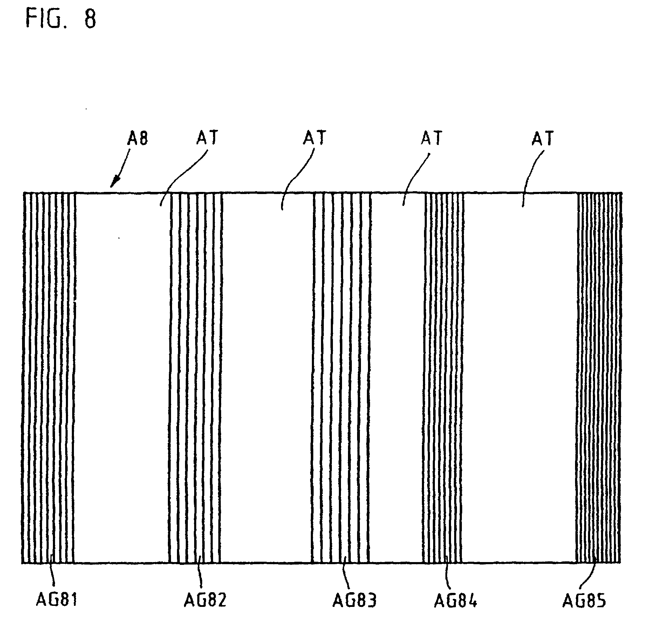

Weitere Ausführungsformen erhält man durch Variationen verschiedener Details:
- Wird die Struktur des Maßstabes invertiert, indem man die reflektierenden Teilungsmarkierungen MR und die absorbierenden Bereiche MA vertauscht, so liefert bei sonst gleicher Anordnung das Photoelement PD0 ein gut moduliertes Taktsignal, während PD1 ein wenig moduliertes Gegentaktsignal erzeugt.
- Das Prisma P kann weggelassen werden, wenn die transparenten Spuren S gemäß Figur 7 durch Spuren S7 mit einem Transversalgitter ersetzt werden, dessen Gitterlinien im wesentlichen parallel zur Meßrichtung X verlaufen und dessen Gitterkonstante so bemessen ist, daß ein beim ersten Durchgang auftreffendes Teilstrahlenbündel beim zweiten Durchgang auf die strukturierten Spuren S'7 fällt. Die Ablenkung der hindurchtretenden Strahlenbündel senkrecht zur Meßrichtung sollte so sein, daß eine gute Trennung zur Inkrementalabtastung gewährleistet bleibt. Beim ersten Durchgang (Hinweg) der Lichtstrahlenbündel durch die Abtastplatte A7 erfolgt keine Ablenkung in Meßrichtung X, sondern an den Spuren S7 ausschließlich eine transversale Ablenkung, bevorzugt in ±1. Beugungsordnung. Beim zweiten Durchgang (Rückweg) erfolgt eine Ablenkung in Meßrichtung X. Im gezeigten Ausführungsbeispiel sind die Photoelemente PD1 sowie PD0 gegenüber der Lichtquelle L in Meßrichtung X versetzt angeordnet. Um die Strahlenbündel zur Erzeugung des Gegentaktsignales auf den versetzten Photodetektor PD0 zu fokussieren, sind die Bereiche AG der Abtastplatte A mit einem Longitudinalgitter grober Gitterkonstante versehen. Die Bereiche AT7 zur Erzeugung des Taktsignales mit Hilfe des weiter versetzt angeordneten Photoelementes PD1 sind mit einem Longitudinalgitter feinerer Gitterkonstante versehen.
- Wenn die Lichtquelle aus der optischen Achse versetzt angeordnet wird, kann das Prisma ebenfalls entfallen, da dadurch eine entsprechende Bündelneigung des einfallenden Lichtes in Y-Richtung erzeugt werden kann.
- Die Strukturierung mit transparenten Zwischenspuren S oder Spuren S7 kann auch entfallen. Ein Lichtstrahlenbündel, das beim ersten Durchgang durch die Abtastplatte A8 gemäß Figur 8 auf eine Teilungsmarkierung AG81 fällt, sollte beim zweiten Durchgang durch die Abtastplatte zumindest nicht auf eine Teilungsmarkierung AG82 bis AG85 mit den gleichen ablenkenden Eigenschaften fallen. Anderenfalls würde dieses Lichtstrahlenbündel die Signalqualität des Signales reduzieren, welches z.B. von dem Photoelement PD0 abgeleitet wird. Um dies zu erreichen, ist es besonders vorteilhaft, die einzelnen Teilungsmarkierungen AG81 bis AG85 mit unterschiedlichen Eigenschaften wie unterschiedlichen longitudinalen (X-Richtung) Gitterkonstanten zu versehen.
- Anstelle der oben beschriebenen Ausgestaltungen der Abtastplatte kann auch die Referenzmarke des Maßstabes erfindungsgemäß strukturiert ausgebildet werden.
- Besonders vorteilhaft ist die erfindungsgemäße Ausgestaltung der Referenzmarke bei einem inkrementalen Positionsmeßsystem anwendbar, bei dem die Teilstriche der inkrementalen Teilung eine transversale Teilung aufweisen und die Photoelemente zur Erzeugung von phasenverschobenen Abtastsignalen transversal übereinander versetzt angeordnet sind. Eine derartige Ausgestaltung der inkrementalen Teilung ist in der aus 2.10.1996 veröffenlichten EP-A-0 735 346 beschrieben.

## Patentansprüche

1. Positionsmeßvorrichtung mit wenigstens einer Beleuchtungseinrichtung (L), einem Teilungsträger (M) mit wenigstens einer Meßteilung (3a) und wenigstens einer Referenzmarke (3b) mit Teilungsmarkierungen (MR), einer Abtastplatte (A, A7, A8) mit einer Anordnung von Teilungsmarkierungen (AG) für die Abtastung der Teilungsmarkierungen (MR) der Referenzmarke (3b) und mit mehreren Photodetektoren (PD0, PD1) zur Erzeugung von positionsabhängigen elektrischen Signalen (S0, S1), **dadurch gekennzeichnet, daß** die einzelnen Teilungsmarkierungen (AG) der Referenzmarke (3b) des Teilungsträgers (M) oder der Abtastplatte (A, A7, A8) eine in Meßrichtung (X) ablenkende Struktur aufweisen.

2. Positionsmeßvorrichtung nach Anspruch 1, **dadurch gekennzeichnet, daß** die Referenzmarke (3b) des Teilungsträgers (M) oder der Abtastplatte (A) aus einer Verteilung von in Meßrichtung (X) beabstandet angeordneten ablenkenden Teilungsmarkierungen (AG) besteht, wobei die Lichtstrahlenbündel, welche von den Teilungsmarkierungen (AG) in eine bestimmte Richtung abgelenkt werden auf einen Photodetektor (PD1) zur Erzeugung eines elektrischen Signales (S1) gerichtet sind, wobei weiterhin die Lichtstrahlenbündel, welche jeweils auf den Zwischenraum zweier Teilungsmarkierungen (AG) treffen auf einen weiteren Photodetektor (PD0) zur Erzeugung eines weiteren elektrischen Signales (S0) gerichtet sind.

3. Positionsmeßvorrichtung nach Anspruch 1 oder 2, **dadurch gekennzeichnet, daß** die Bereiche (AT7) zwischen den Teilungsmarkierungen (AG) der Referenzmarke (A7) eine ablenkende Struktur aufweisen, die von der ablenkenden Struktur der Teilungsmarkierungen (AG) abweicht.

4. Positionsmeßvorrichtung nach einem der Ansprüche 1, 2 oder 3, **dadurch gekennzeichnet, daß** die Teilungsmarkierungen (AG) Gitter mit einer Vielzahl von Teilungsperioden pro Teilungsmarkierung (AG) sind.

5. Positionsmeßvorrichtung nach Anspruch 3 oder 4, **dadurch gekennzeichnet, daß** die Bereiche (AT7) zwischen den Teilungsmarkierungen (AG) Gitter sind, die eine von den Teilungsmarkierungen (AG) abweichende Gitterkonstante und/oder Orientierung aufweisen.

6. Positionsmeßvorrichtung nach Anspruch 4, **dadurch gekennzeichnet, daß** die Gitter (AG) Phasengitter sind, welche die nullte Beugungsordnung unterdrücken.

7. Positionsmeßvorrichtung nach einem der vorhergehenden Ansprüche 1 bis 6, **dadurch gekennzeichnet, daß** die Referenzmarke (3b) des Teilungsträgers (M) oder der Abtastplatte (A, A7) mehrere Spuren (S, S', S7, S'7) aufweist, wobei sich Teilungsmarkierungen (AG) tragende Spuren (S', S'7) und Zwischenspuren (S, S7) quer zur Meßrichtung liegend abwechseln.

8. Positionsmeßvorrichtung nach Anspruch 7, **dadurch gekennzeichnet, daß** die zumindest eine Zwischenspur (S) eine transparente Spur ist.

9. Positionsmeßvorrichtung nach Anspruch 7, **dadurch gekennzeichnet, daß** zumindest eine Zwischenspur (S7) eine ablenkende Struktur aufweist, die im wesentlichen quer zur Meßrichtung X ablenkt.

10. Positionsmeßvorrichtung nach einem der Ansprüche 7 bis 9, **dadurch gekennzeichnet, daß** die zumindest eine Zwischenspur (S, S7) quer zur Meßrichtung (X) breiter ausgebildet ist, als die zumindest eine Teilungsmarkierungen (AG) tragende Spur (S', S'7).

11. Positionsmeßvorrichtung nach einem der Ansprüche 1 bis 10, **dadurch gekennzeichnet, daß** ein Lichtstrahlenbündel der Lichtquelle (L) mittels einer Linse (K) kollimiert wird, von einer Ablenkeinrichtung (P, S7) quer zur Meßrichtung (X) abgelenkt wird und auf die Referenzmarke (3b) des Teilungsträgers (M) trifft, und das auftreffende Licht an reflektierenden Teilungsmarkierungen (MR) des Teilungsträgers (M) zu den Teilungsmarkierungen (AG) der Abtastplatte (A, A7) mit der in Meßrichtung (X) ablenkenden Struktur geleitet wird und von den Teilungsmarkierungen (AG) abgelenktes Licht auf einen Photodetektor (PD1) und auf die Zwischenräume (AT, At7) fallendes Licht auf einen weiteren Photodetektor (PD0) gerichtet ist.

12. Positionsmeßvorrichtung nach Anspruch 11, **dadurch gekennzeichnet, daß** die Ablenkeinrichtung ein Prisma (P) ist, und daß die Referenzmarke (3b) oder Abtastplatte (A) mehrere Spuren (S, S') aufweist, wobei sich Teilungsmarkierungen (AG) tragende Spuren (S') und transparente Zwischenspuren (S) quer zur Meßrichtung (X) abwechseln und in einem gegenseitigen Abstand (R) angeordnet sind, und daß das von der Lichtquelle (L) ausgehende Lichtbündel und das von dem Teilungsträger (M) reflektierte Lichtbündel in diesem Abstand (R) auf die Abtastplatte (A) treffen.

13. Positionsmeßvorrichtung nach Anspruch 4 oder 6, **dadurch gekennzeichnet, daß** die Gitterkonstanten der einzelnen Teilungsmarkierungen (AG) sich voneinander unterscheiden.

## Claims

1. Positioning measuring device having at least one illumination device (L), a division carrier (M) with at least one measurement division (3a) and at least one reference mark (3b) with division markings (MR), a scanning plate (A, A7, A8) with an arrangement of division markings (AG) for scanning of the division markings (MR) of the reference mark (3b) and having a plurality of photodetectors (PD0, PD1) in order to produce position-dependent electrical signals (S0, S1), **characterised in that** the individual division markings (AG) of the reference mark (3b) of the division carrier (M) or of the scanning plate (A, A7, A8) have a deflecting structure in the measuring direction (X).

2. Position measuring device according to claim 1, **characterised in that** the reference mark (3b) of the division carrier (M) or of the scanning plate (A) comprises a distribution of deflecting division markings (AG), which are arranged at a spacing in the measuring direction (X), the light beams which are deflected from the division markings (AG) in a specific direction being directed onto a photodetector (PD1) in order to produce an electrical signal (S1), the light bundles furthermore which impinge respectively on the intermediate space between two division markings (AG) being directed onto a further photodetector (PD0) in order to produce a further electrical signal (SO).

3. Position measuring device according to claim 1 or 2, **characterised in that** the regions (AT7) between the division markings (AG) of the reference mark (A7) have a deflecting structure which differs from the deflecting structure of the division markings (AG).

4. Position measuring device according to one of the claims 1, 2 or 3, **characterised in that** the division markings (AG) are gratings with a multiplicity of division periods per division marking (AG).

5. Position measuring device according to claim 3 or 4, **characterised in that** the regions (AT7) between the division markings (AG) are gratings which have a grating constant and/or orientation which differs from the division markings (AG).

6. Position measuring device according to claim 4, **characterised in that** the gratings (AG) are phase gratings which suppress the zero diffraction order.

7. Position measuring device according to one of the preceding claims 1 to 6, **characterised in that** the reference mark (3b) of the division carrier (M) or of the scanning plate (A, A7) has a plurality of tracks (S, S', S7, S'7), the tracks (S', S'7) and the intermediate tracks (S, S7) which carry the division markings (AG) alternating situated transversely to the measuring direction.

8. Position measuring device according to claim 7, **characterised in that** at least the one intermediate track (S) is a transparent track.

9. Position measuring device according to claim 7, **characterised in that** at least one intermediate track (S7) has a deflecting structure which deflects essentially transversely relative to the measuring direction (X).

10. Position measuring device according to one of the claims 7 to 9, **characterised in that** at least the one intermediate track (S, S7) is configured broader transversely relative to the measuring direction (X) than at least the one track (S', S7) which carries division markings (AG).

11. Position measuring device according to one of the claims 1 to 10, **characterised in that** a light beam of the light source (L) is collimated by means of a lens (K), is deflected transversely relative to the measuring direction (X) by a deflection device (P, S7) and impinges on the reference mark (3b) of the division carrier (M), and the light which impinges on the reflecting division markings (MR) of the division carrier (M) is directed to the division markings (AG) of the scanning plate (A, A7) by the structure which deflects in the measuring direction (X) and light deflected from the division markings (AG) is directed onto a photodetector (PD1) and the light falling onto the intermediate spaces (AT, AT7) is directed onto a further photodetector (PD0).

12. Position measuring device according to claim 11, **characterised in that** the deflection device is a prism (P), and **in that** the reference mark (3b) or scanning plate (A) has a plurality of tracks (S, S'), tracks (S') carrying the division markings (AG) and transparent intermediate tracks (S) alternating transversely relative to the measuring direction (X) and being disposed at a mutual spacing (R) and **in that** the light beam emanating from the light source (L) and the light beam reflected from the division carrier (M) impinge on the scanning plate (A) at this spacing (R).

13. Position measuring device according to claim 4 or 6, **characterised in that** the grating constants of the individual division markings (AG) differ from each other.

## Revendications

1. Dispositif de mesure de position, comprenant au moins un dispositif d'éclairage (L), un support de graduation (M) avec au moins une graduation de mesure (3a) et au moins un repère de référence (3b) portant des repères de graduation (MR), une plaque de palpage (A, A7, A8) avec un agencement de repères de graduation (AG), pour le palpage des repères de graduation (MR) du repère de référence (3b), et plusieurs détecteurs opto-électroniques (PD0, PD1) pour produire des signaux électriques (S0, Si) dépendants de la position, **caractérisé en ce que** les différents repères de graduation (AG) du repère de référence (3b) du support de graduation (M) ou de la plaque de lecture (A, A7, A8) présentent une structure qui produit une déviation dans la direction de mesure (X).

2. Dispositif de mesure de position selon la revendication 1,**caractérisé en ce que** le repère de référence (3b) du support de graduation (M) ou de la plaque de palpage (A) est formé d'un agencement de repères de graduation (AG) diffringents, espacés dans la direction de mesure (X), les faisceaux de rayons lumineux qui sont déviés dans une direction donnée par les repères de graduation (AG) étant dirigés sur un détecteur opto-électronique (PD1), aux fins de produire un signal électrique (S1), et les faisceaux de rayons lumineux qui arrivent sur l'espace entre deux repères de graduation (AG) étant dirigés sur un détecteur opto-électronique (PD0) supplémentaire, aux fins de produire un signal électrique (S0) supplémentaire.

3. Dispositif de mesure de position selon la revendication 1 ou 2,**caractérisé en ce que** les zones (AT7) entre les repères de graduation (AG) du repère de référence (A7) présentent une structure diffringente qui est différente de la structure diffringente des repères de graduation (AG).

4. Dispositif de mesure de position selon une des revendications 1, 2 ou 3, **caractérisé en ce que** les repères de graduation (AG) sont des réseaux avec plusieurs périodes de graduation par repère de graduation (AG).

5. Dispositif de mesure de position selon la revendication 3 ou 4, **caractérisé en ce que** les zones (AT7) entre les repères de graduation (AG) sont des réseaux avec une constante de réseau et/ou une orientation différente de celle des repères de graduation (AG).

6. Dispositif de mesure de position selon la revendication 4, **caractérisé en ce que** les réseaux (AG) sont des réseaux de phase qui éliminent l'ordre de diffraction zéro.

7. Dispositif de mesure de position selon une des revendications 1 à 6 précédentes, **caractérisé en ce que** le repère de référence (3b) du support de graduations (M) ou de la plaque de palpage (A, A7) comporte plusieurs pistes (S, S', S7, S'7), des pistes (S, S') portant des repères de graduation (AG) et des pistes intermédiaires (S7, S'7) alternant dans la direction transversale à la direction de mesure.

8. Dispositif de mesure de position selon la revendication 7, **caractérisé en ce que** la piste intermédiaire (S), au nombre d'au moins une, est une piste transparente.

9. Dispositif de mesure de position selon la revendication 7, **caractérisé en ce que** la piste intermédiaire (S7), au nombre d'au moins une, présente une structure diffringente, qui opère une diffraction essentiellement transversalement à la direction de mesure (X).

10. Dispositif de mesure de position selon une des revendications 7 à 9, **caractérisé en ce que** la piste intermédiaire (S, S7), transversalement à la direction de mesure (X), est plus large que la piste (S', S'7), au nombre d'au moins une, portant les repères de graduation (AG).

11. Dispositif de mesure de position selon une des revendications 1 à 10, **caractérisé en ce qu'**un faisceau de rayons lumineux de la source de lumière (L) est collimaté à l'aide d'une lentille (K), est dévié transversalement à la direction de mesure (X) par un dispositif de diffraction (P, S7) et frappe le repère de référence (3b) du support de graduation (M), et la lumière, au niveau de repères de graduation réfléchissants (MR) du support de graduation (M), est dirigée vers les repères de graduation (AG) de la plaque de palpage (A, A7) à structure diffringente dans la direction de mesure (X) et la lumière diffractée par les repères de graduation (AG) est dirigée sur un détecteur opto-électronique (PD1), et la lumière qui arrive sur les espaces intermédiaires (AT, At7) est dirigée sur un détecteur opto-électronique (PD0) supplémentaire.

12. Dispositif de mesure de position selon la revendication 11, **caractérisé en ce que** le dispositif de diffraction est un prisme (P) et **en ce que** le repère de référence (3b) ou la plaque de palpage (A) porte plusieurs pistes (S, S'), des pistes (S') portant des repères de graduation (AG) et des pistes intermédiaires (S), transparentes, alternant transversalement à la direction de mesure (X) et étant espacées d'une distance (R), et **en ce que** le faisceau de lumière émis par la source de lumière (L) et le faisceau de lumière réfléchi par le support de graduation (M) arrive avec cet espacement sur la plaque de palpage (A).

13. Dispositif de mesure de position selon la revendication 4 ou 6, **caractérisé en ce que** les constantes de réseau des différents repères de graduation (AG) sont différentes les unes des autres.
